# EUROPÄISCHE PATENTSCHRIFT

(11) **EP 2 867 557 B1**
(45) Veröffentlichungstag und Bekanntmachung des Hinweises auf die Patenterteilung: **18.04.2018**
(21) Anmeldenummer: 13732155.0
(22) Anmeldetag: 27.06.2013
(51) Int. Cl.: F16D 66/02, F16D 55/22

(54) **SCHEIBENBREMSE EINES KRAFTFAHRZEUGS**
DISC BRAKE OF A MOTOR VEHICLE
FREIN À DISQUE DE VÉHICULE À MOTEUR

(30) Priorität: 28.06.2012 DE 102012012830
(43) Veröffentlichungstag der Anmeldung: 06.05.2015
(73) Patentinhaber: KNORR-BREMSE Systeme für Nutzfahrzeuge GmbH, 80809 München (DE)
(72) Erfinder: HUBER, Christian, 80937 München (DE)
(86) Internationale Anmeldenummer: PCT/EP2013/063510
(87) Internationale Veröffentlichungsnummer: WO 2014/001452

(56) Entgegenhaltungen:
- DE-A1- 1 630 569
- DE-A1- 2 118 875
- DE-A1- 3 313 078
- DE-A1-102005 022 597

## Beschreibung

Die vorliegende Erfindung betrifft eine Scheibenbremse eines Kraftfahrzeugs, insbesondere eines Nutzfahrzeugs gemäß dem Oberbegriff des Anspruchs 1.

Einrichtungen zur Erfassung eines Bremsbelagsverschleißes bei Scheibenbremsen von Kraftfahrzeugen, insbesondere Nutzfahrzeugen sind in zahlreichen Ausführungsvarianten aus dem Stand der Technik bekannt.

Aus der DE 42 30 831 B4 ist ein Belagverschleißdetektor für eine Scheibenbremse mit einer Nachstelleinrichtung bekannt, der in einem an der Scheibenbremse lösbar befestigbaren Gehäuse angeordnet ist und die axiale Relativlage eines Stellelements der Nachstelleinrichtung erfasst und hieraus ein entsprechendes Verschleißsignal ableitet.

Bekannt sind auch Belagverschleißdetektoren in Gestalt von im Reibbelag des Bremsbelags eingebetteten Leitern oder Leiterschleifen, die bei Kontakt mit der Bremsscheibe ein Signal in einer elektronischen Bremssteuereinheit erzeugen, das dem Fahrer des Kraftfahrzeugs, in dem die Scheibenbremse verbaut ist, anzeigt, dass der jeweilige Bremsbelag ausgetauscht werden muss.

Derartige Verschleißerkennungssensoren sind allerdings nicht zur kontinuierlichen Verschleißerkennungsdetektion geeignet, sondern lediglich zur Anzeige des Erreichens eines vorbestimmten Verschleißzustandes des jeweiligen Bremsbelags, beispielsweise um anzuzeigen, das der Bremsbelag innerhalb der nächsten 1000 Fahrkilometer ausgetauscht werden muss.

Aus der DE 10 2005 022 597 A1 ist eine Vorrichtung zur Bremsbelagverschleißbestimmung bekannt, die den Bremsbelagverschleiß aus dem Verschiebeweg eines Schwimmsattels einer Schwimmsattel-Scheibenbremse ermittelt. Dazu wird ein induktiver Aufnehmer mit einer Spule und einem Spulenkern verwendet, wobei der Spulenkern eine Lagerachse einer Führungsvorrichtung des Schwimmsattels ist, der von einer Spule umwickelt ist und so den Verschiebeweg des Bremssattels gegenüber einem ortsfesten Bremsträger bestimmt, wobei der Verschiebeweg des Bremssattels abhängig ist vom Verschleiß der in dem Bremssattel angeordneten Bremsbeläge.

Mit einer derart ausgebildeten Bremsbelagverschleißbestimmungsvorrichtung kann allerdings nur der Summenverschleiß der Bremsbeläge erfasst werden.

Aus der DE 21 18 875 A1 ist einen Bremsbelagverschleißanzeige bekannt, bei der der Bremsbelagverschleiß induktiv bestimmt wird. Dabei ist eine Spule im Bremszylinder oder am Bremsgehäuse angeordnet und der Spulenkern als Teil des Bremskolbens bzw. einer Nachstellspindel ausgebildet.

Aufgabe der vorliegenden Erfindung ist es, eine Scheibenbremse mit einer Einrichtung zur Erfassung eines Bremsbelagverschleißes bereitzustellen, die zum einen den Verschleiß der Bremsbeläge getrennt zu erfassen vermag und zum anderen sowohl in Schwimmsattel- als auch in Festsattel-Scheibenbremsen einsetzbar ist.

Diese Aufgabe wird durch eine Scheibenbremse eines Kraftfahrzeugs mit den Merkmalen des Anspruchs 1 gelöst.

Bei der erfindungsgemäßen Scheibenbremse, die einen einer Bremsscheibe übergreifenden Bremssattel sowie in einem Belagschacht des Bremssattels angeordnete, mit einer Belagträgerplatte und einem daran befestigten Reibbelag versehene, Bremsbeläge aufweist sowie eine Einrichtung zur Erfassung eines Bremsbelagverschleißes mit mindestens einem Verschleißsensor, ist der Verschleißsensor erfindungsgemäß als an der Belagträgerplatte befestigter induktive Planarspule zur Bestimmung des Abstands von der Bremsscheibe ausgebildet, wobei der Verschleißsensor mit einer Auswerteschaltung verbunden ist.

Durch die Anordnung eines induktiven Abstandssensor an der Belagträgerplatte des Bremsbelags ist es ermöglicht, direkt den Abstand zwischen Belagträgerplatte und Bremsscheibe zu bestimmen und damit den Verschleißzustand des Reibbelags eines bestimmte Bremsbelags kontinuierlich zu erfassen.

Die Anbringung des induktiven Abstandssensors hat außerdem den Vorteil, dass ein solcher Abstandssensor und die zugehörige Auswerteschaltung sowohl in Schwimmsattel- als auch in Festsattel-Scheibenbremsen einsetzbar ist, da der Abstandssensor direkt an der Belagträgerplatte des Bremsbelags angebracht wird.

Weitere Vorteile einer solchen Scheibenbremse bestehen im hohen Auflösungsvermögen einer solchen induktiven Messung und der Möglichkeit, neben dem Verschleiß der Bremsbeläge auch den Hub des Bremsbelags bei einem Bremsvorgang zu bestimmen.

Durch die Möglichkeit der getrennten Erfassung des Verschleißes der auf beiden Seiten einer Bremsscheibe angeordneten Bremsbeläge können außerdem sehr schnell mögliche Fehlstellungen der Bremsbeläge in den Belagschächten detektiert werden.

Eine solche Planarspule hat den großen Vorteil, dass sie ohne Vergrößerung des Aufbaus der Belagträgerplatte flächig auf der Belagträgerplatte aufgebracht werden kann, ohne Platz in den ohnehin eng ausgelegten Belagschächten zu beanspruchen.

Weitere vorteilhafte Ausgestaltungen der Erfindung sind Gegenstand der Unteransprüche.

In einer vorteilhaften Ausgestaltung ist der Verschleißsensor auf einem auf der Belagträgerplatte aufgebrachten temperaturstabilen Trägerwerkstoff angeordnet. Dadurch wird eine Temperaturabschirmung des Verschleißsensors erreicht, ohne das Messsignal zu beeinflussen. Als Trägerwerkstoffe kommen hier beispielsweise Duroplaste, Keramik, Verbundwerkstoffe oder eine Ferrokeramik in Frage.

Nachfolgend wird ein Ausführungsbeispiel der Erfindung anhand der beiliegenden Zeichnung näher erläutert. Es zeigen:
- Figur 1: eine schematische Ansicht einer auf einem Bremsbelag angeordneten Verschleißerkennungseinrichtung,
- Figur 2: eine Draufsicht auf einen Bremssattel mit in einem Belagschacht beidseits einer Bremsscheibe angeordneten Bremsbelägen und
- Figur 3: ein Diagramm eines in Abhängigkeit des Abstands eines Verschleißsensor von der Bremsscheibe sich verändernden Sensorsignals.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsbelags, des Verschleißsensors und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

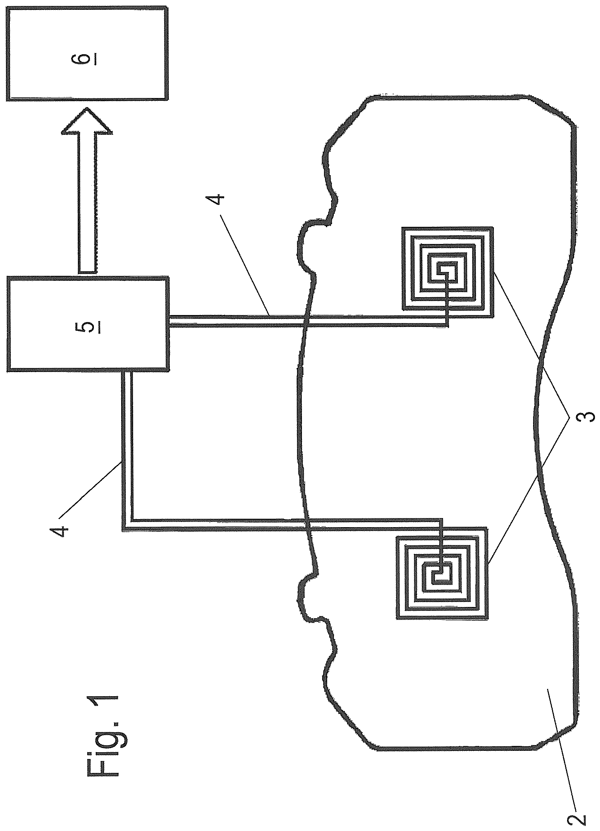

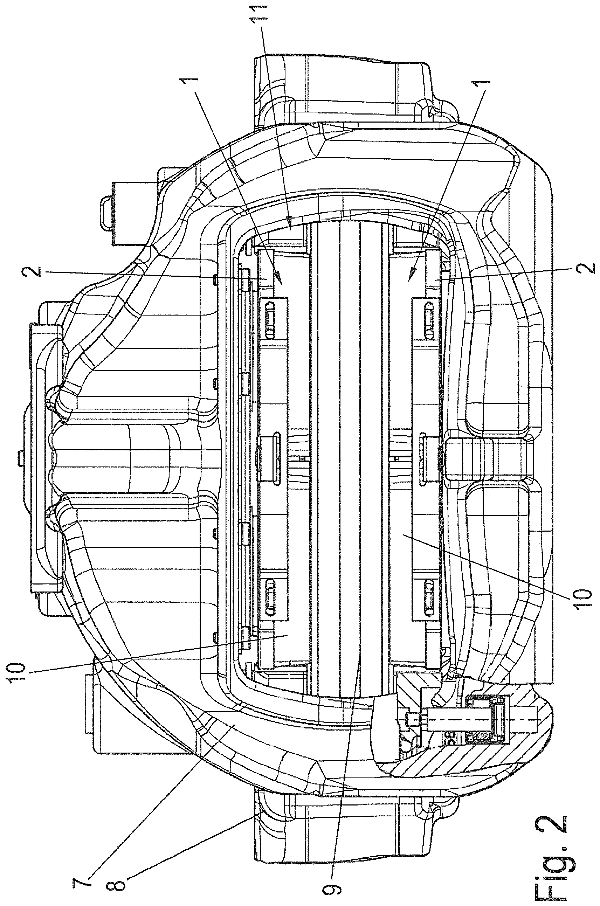

In Figur 1 ist eine Belagträgerplatte 2 eines Bremsbelags dargestellt, der Bestandteil einer Scheibenbremse eines Kraftfahrzeugs, insbesondere eines Nutzfahrzeugs ist. Bei der Scheibenbremse übergreift in aus dem Stand der Technik bekannter Weise ein Bremssattel 7 eine Bremsscheibe 9, wie es in Figur 2 gezeigt ist. Dabei kann es sich sowohl um einen auf einem Bremsträger 8 verschiebbar gelagerten Bremssattel 7 einer Schiebesattel-Scheibenbremse als auch um den Bremssattel einer Festsattel-Scheibenbremse handeln.

Einer oder bevorzugt zwei Bremsbeläge 1 mit jeweils einer Belagträgerplatte 2 und einem an der Belagträgerplatte 2 befestigten Reibbelag 10 sind dabei in einem Belagschacht 11 des Bremssattels 7 der Scheibenbremse angeordnet.

Auf jedem der Belagträgerplatten 2 der Bremsbeläge 1 ist mindestens ein Verschleißsensor 3 in Gestalt einer Planarspule aufgebracht, der über ein Kabel 4 mit einer Auswerteschaltung 5 verbunden ist. Die Auswerteschaltung 5 besteht dabei vorzugsweise aus einem Schwingkreis, bei dem die Planarspule den induktiven Bestandteil des Schwingkreises bildet. Denkbar sind auch die Ausbildung der Auswerteschaltung als Oszillatorschaltung, wobei die Auswertung anhand der Frequenz oder Amplitude bzw. Güte erfolgt, oder als µC-basierte Pulsmessung.

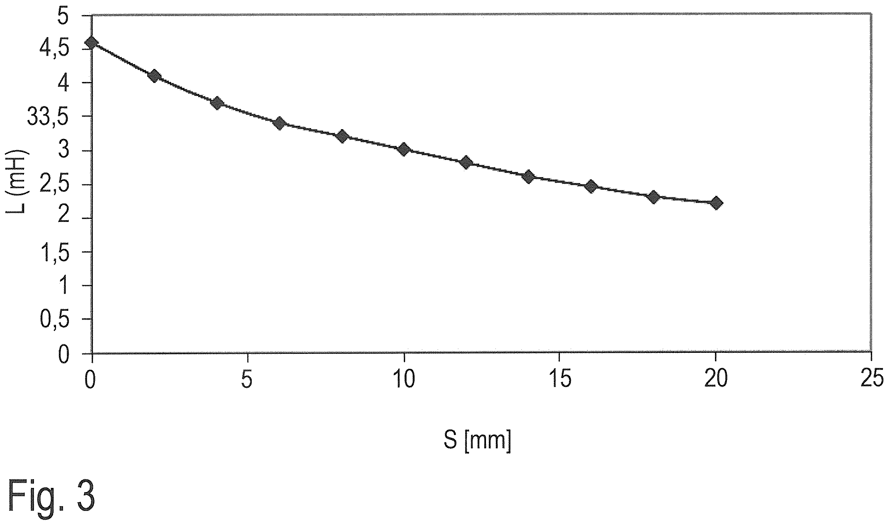

Das der Auswerteschaltung 5 an eine elektronische Bremssteuereinheit 6 weitergegebene Signal ist dabei vorzugsweise dergestalt, dass in einem vordefinierten Abstand der Belagträgerplatte 2 von der Bremsscheibe in der Funktionsstellung im Belagschacht mit neuen, d.h. noch unverschlissenen Reibbelag der Schwingkreis ein vordefiniertes Ausgangssignal an die elektronische Bremssteuereinheit 6 weitergibt, welche in dem Moment verändert wird, in dem sich der Bremsbelag 1 und insbesondere die Belagträgerplatte 2 mit dem darauf angebrachten Verschleißsensor 3 infolge eines Bremsvorganges der Bremsscheibe 9 nähert und bedingt durch die Annäherung der metallischen Bremsscheibe 9 an die Planarspule eine Dämpfung des Schwingkreises hervorruft, die in der elektronischen Bremssteuereinheit 6 weiterverarbeitet werden kann, wobei durch die Dämpfung des Schwingkreises das von dem Schwingkreis abgegebene Signal in der Bremssteuereinheit 6 in einen Abstandswert umgerechnet wird. Ein solches Signal ist beispielhaft in Figur 3 dargestellt, wobei in diesem Diagramm eine in Milli-Henry gemessene Induktivität L des als Planarspule ausgebildeten Verschleißsensor 3 in Abhängigkeit vom Abstand s der an der Belagträgerplatte 2 befestigten Planarspule von der Bremsscheibe 9 abgetragen ist.

Zum Schutz des Verschleißsensors 3 vor einem bei dem Bremsvorgang auftretenden hohen Temperaturen ist auf der Belagträgerplatte 2 vorzugsweise ein temperaturstabiler Trägerwerkstoff aufgebracht, in den der Verschleißsensor 3 eingebettet oder auf dem der Verschleißsensor 3 aufgebracht ist. Bei dem temperaturstabilen Trägerwerkstoff handelt es sich dabei vorzugsweise um einen Duroplast, eine Keramik, einen Verbundwerkstoff, eine Ferrokeramik oder dergleichen.

Die Anbringung mehrerer Verschleißsensoren 3 auf einer Belagträgerplatte 2, wie es in Figur 1 gezeigt ist, kann dazu genutzt werden, auch räumliche Fehlstellungen des Bremsbelags 1 im Belagschacht 11 festzustellen.

Wichtig ist, dass durch die auf der Belagträgerplatte 2 angebrachten Verschleißsensoren 3 zum einen die Abnutzung jedes in der Scheibenbremse eingesetzten Bremsbelags 1 getrennt erfasst und dass sowohl der Verschleiß der Bremsbeläge 1, d.h. der Verschleiß der Reibbeläge 10 der Bremsbeläge 1 als auch der beim Bremsvorgang ausgeübte Hub des Bremsbelags 1 gegenüber der Bremsscheibe 9 gemessen werden kann.

Vorteilhaft ist außerdem, das durch die Einstellung der Auswerteschaltung 5, welche insbesondere einen Schwingkreis enthält oder als solcher ausgebildet ist, auch zur Identifikation eines Originalbelags durch Abgleich mit einer Schwingkreis-Kennlinie dienen kann.

Die Auswerteschaltung 5 und die elektronische Bremssteuereinheit 6 sind dabei bevorzugt außerhalb des Bremssattels 7, der Bremsscheibe 9 und des Belagschachtes 11 angeordnet, um Beschädigungen infolge des im unmittelbaren Bereich der Bremse vorherrschenden Umgebungsbedingungen, insbesondere durch Hitze, Feuchtigkeit und Schmutz zu vermeiden.

Da die Zusammensetzung des Bremsbelags 1 metallische Partikel enthält, kann es zum Erreichen einer optimalen Kennlinie vorteilhaft sein, diese Zusammensetzung oder die Geometrie des Bremsbelags 1 in vorbestimmten Bereichen anzupassen.

### Bezugszeichen:

- 1: Bremsbelag
- 2: Belagträgerplatte
- 3: Verschleißsensor
- 4: Kabel
- 5: Auswerteschaltung
- 6: Bremssteuereinheit
- 7: Bremssattel
- 8: Bremsträger
- 9: Bremsscheibe
- 10: Reibbelag
- 11: Belagschacht

- s: Abstand des Sensors von der Bremsscheibe
- L: Induktivität eines als Spule ausgebildeten Verschleißensors

## Patentansprüche

1. Scheibenbremse eines Kraftfahrzeugs, insbesondere eines Nutzfahrzeugs, aufweisend
- einen eine Bremsscheibe (9) übergreifenden Bremssattel (7),
- mindestens einen in einem Belagschacht (11) des Bremssattels (7) angeordneten, mit einer Belagträgerplatte (2) und einem daran befestigten Reibbelag (10) versehener Bremsbelag (1),
- eine Einrichtung zur Erfassung eines Bremsbelagverschleißes mit mindestens einem Verschleißsensor (3),
**dadurch gekennzeichnet, dass**
- der Verschleißsensor (3) als an der Belagträgerplatte (2) befestigte Planarspule zur Bestimmung des Abstands der Belagträgerplatte (2) von der Bremsscheibe (9) ausgebildet ist, der mit einer Auswerteschaltung (5) verbunden ist.

2. Scheibenbremse nach Anspruch 1, **dadurch gekennzeichnet, dass** der Verschleißsensor (3) auf einem auf der Belagträgerplatte (2) aufgebrachten temperaturstabilen Trägerwerkstoff angeordnet ist.

3. Scheibenbremse nach Anspruch 1 oder 2, **dadurch gekennzeichnet, dass** auf der Belagträgerplatte (2) mehrere, insbesondere zwei Verschleißsensoren (3) angeordnet sind.

4. Scheibenbremse nach einem der vorstehenden Ansprüche, **dadurch gekennzeichnet, dass** mit dem Verschleißsensor (3) verbundene Auswerteschaltung (5) mit einer elektronischen Bremssteuereinheit (6) verbunden ist, zur Auswertung des in der Auswerteschaltung (5) erzeugten Signals.

## Claims

1. Disc brake of a motor vehicle, in particular of a commercial vehicle, comprising
- a brake calliper (7) which engages over a brake disc (9),
- at least one brake pad (1) which is arranged in a pad shaft (11) of the brake calliper (7) and is provided with a backing plate (2) and a friction lining (10) attached thereto,
- a device for detecting brake pad wear with at least one wear sensor (3),
**characterised in that**
- the wear sensor (3) is embodied as a planar coil which is attached to the backing plate (2) for determining the distance between the backing plate (2) and the brake disc (9) and which is connected to an evaluation circuit (5).

2. Disc brake according to claim 1, **characterised in that** the wear sensor (3) is arranged on a thermally stable carrier material which is fastened to the backing plate (2).

3. Disc brake according to claim 1 or 2, **characterised in that** a plurality of wear sensors (3), in particular two thereof, are arranged on the backing plate (2).

4. Disc brake according to any of the preceding claims, **characterised in that** an evaluation circuit (5) which is connected to the wear sensor (3) is connected to an electronic brake control unit (6), in order to evaluate the signal generated in the evaluation circuit (5).

## Revendications

1. Frein à disque d'un véhicule automobile, notamment d'un véhicule utilitaire, comportant
- un étrier (7) de frein chevauchant un disque (9) de frein,
- au moins une garniture (1) de frein disposée dans un puits (11) de garniture de l'étrier (7) de frein et pourvue d'une plaque formant porte-garniture et d'une garniture (10) de friction, qui y est fixée,
- un dispositif de détection d'une usure de la garniture de frein ayant au moins un capteur (3) d'usure,
**caractérisé en ce que**
- le capteur (3) d'usure est, pour la détermination de la distance de la plaque (2) de porte-garniture au disque (9) de frein, constitué sous la forme d'une bobine plane, fixée à la plaque (2) de porte-garniture, et est relié à un circuit (5) d'exploitation.

2. Frein à disque suivant la revendication 1, **caractérisé en ce que** le capteur (3) d'usure est monté sur un matériau de support stable en température et déposé sur la plaque (2) de porte-garniture.

3. Frein à disque suivant la revendication 1 ou 2, **caractérisé en ce que** plusieurs, notamment deux capteurs (3) de frein, sont montés sur la plaque (2) de porte-garniture.

4. Frein à disque suivant l'une des revendications précédentes, **caractérisé en ce qu'**un circuit (5) d'exploitation, relié au capteur (3) d'usure, est relié à une unité (6) électronique de commande de frein pour exploiter le signal produit par le circuit (5) d'exploitation.
